# EUROPÄISCHE PATENTSCHRIFT

(11) **EP 1 897 893 B1**
(45) Veröffentlichungstag und Bekanntmachung des Hinweises auf die Patenterteilung: **21.10.2009**
(21) Anmeldenummer: 07115213.6
(22) Anmeldetag: 29.08.2007
(51) Int. Cl.: C08B 37/00, D06M 15/03, D06M 15/11, D21H 17/24, D21H 17/28, D21H 19/54

(54) **STÄRKE-CHITOSAN-MISCHUNG, VERFAHREN ZU IHRER HERSTELLUNG UND IHRE VERWENDUNG**
STARCH-CHITOSAN COMPOUND, METHOD FOR ITS MANUFACTURE AND APPLICATION
MÉLANGE D'AMIDON-CHITOSAN, SON PROCÉDÉ DE FABRICATION ET SON UTILISATION

(30) Priorität: 08.09.2006 DE 102006042791
(43) Veröffentlichungstag der Anmeldung: 12.03.2008
(73) Patentinhaber: Emsland-Stärke GmbH, 49824 Emlichheim (DE)
(72) Erfinder: Dijksterhuis, Jan, 7751, Daalen (NL); Woll, Karl-Ludwig Dr., 48683, Ahaus (DE); Ramaker-Stam, Sabine, 49843, Getelo (DE)
(74) Vertreter: Neidl-Stippler, Cornelia

(56) Entgegenhaltungen:
- EP-A- 0 803 512
- WO-A-20/06124869
- DE-A1-102005 017 376
- KR-A- 20010 075 905
- US-A- 4 474 847

## Beschreibung

Die Erfindung betrifft Stärke-Chitosanmischungen, ihre Herstellung und Verwendung zur Verbesserung physikalischer und chemischer Eigenschaften von Faserstoffen, wie Filamenten, Glas- und Textilfasern, sowie von Produkten aus Faserstoffen, insbesondere Papiere, Kartons, Pappen, Glasfasergewebe und textile Faserstoffprodukte.

Native oder chemisch modifizierte Stärken werden häufig als Hilfsstoffe bei der Faserstoffbehandlung und Faserstoffproduktherstellung z. B. zur Festigkeitssteigerung oder zur Verbesserung der Oberflächeneigenschaften eines Faserstoffprodukts, Verarbeitbarkeit des Faserprodukts und seiner Glätte sowie während des Herstellungsprozesses eingesetzt. Dabei werden hier unter Faserprodukten solche auf Basis von Holzfasern, Zellstoff, Holzschliff, Recyclingfaserstoffe, also bspw. Papier, Tapeten, Pappe, Kunststofffaserprodukte, Glasfaserprodukte, Spanplatten, Faserplatten, Faservliese, auch Holzfaservliese, Textilien, verstanden.

Bei der Stärkebehandlung von auf Zellstoff basierenden Faserstoffprodukten ist beispielsweise das Verfahren der Oberflächenleimung von großer technischer Bedeutung und daher in der Papierindustrie weit verbreitet. Es handelt sich hierbei um die Applikation eines Stärkefilms auf Papier- oder Kartonoberflächen zur Verbesserung diverser Produkteigenschaften. Die dabei eingesetzten Stärken, sogenannte Oberflächenstärken, werden beispielsweise zur Trockenverfestigung, Verbesserung des Rupfverhaltens der Papieroberfläche oder zur Senkung der Papierporosität eingesetzt. Darüber hinaus können gezielt die Verdruck- und Bedruckbarkeitseigenschaften von Papieren positiv beeinflusst werden. Ebenso als Träger weiterer chemischer Additive für die Papieroberfläche, wie Hydrophobierungs- und Lipophobierungsmittel, Pigmente, Farbstoffe oder optische Aufheller, übernimmt die Oberflächenstärke eine wichtige Funktion.

Eine weitere Anwendung findet sich beim sogenannte Schlichten von Textilfasern - dort geht es analog zum sonstigen Sprachgebrauch um einen Glättvorgang, wenngleich das Glätten nicht der einzige und auch nicht der wesentlichste Aspekt ist. Geschlichtet werden Garne, die beim Weben als Kettgarn eingesetzt werden. Da die Garne ursprünglich offen strukturiert sind, können sie den verschiedenartigen und teilweise intensiven Beanspruchungen des Webens nicht standhalten. Sie würden, insbesondere aufgrund von Scheuerbeanspruchungen aufrauen, wobei sich Faseraufschiebungen ausbilden, die das Weben unmöglich machen.

Garnschädigungen dieser und anderer Art sind deshalb unbedingt zu vermeiden. Aus diesem Grund muss man die Garne schützen. Diesen Schutz vermittelt man durch ein ggf. aushärtbares adhäsives Material, das vereinfacht dargestellt, einen Schutzfilm um das Garn herum ausbildet. Dieses adhäsive Material bezeichnet man als "Schlichte". Sie wird in Wasser gelöst und als "Schlichteflotte" auf das Kettgarn appliziert. Nach dem Webprozess wird die "Schlichte" in den meisten Fällen aus dem Gewebe entfernt d.h. ausgewaschen, da sie die nachfolgenden Veredlungsprozesse behindern würde.

Da die Adhäsion/Klebkraft von Schlichtemitteln basierend auf Stärke auf synthetischen Garnen, Filamenten und Glasfasern nicht ausreichend ist, werden für diese Materialien häufig synthetische Polymere, wie Polyvinylalkohol, Polyester, Acrylate oder dgl. als Schlichte eingesetzt. Diese Materialien sind aber aufgrund ihrer mangelnden Umweltverträglichkeit bedenklich und müssen später aufwändig entsorgt werden.

Es ist auch möglich, Chitosan, ein aus Krebsen und Insekten herstellbares Chitin-Produkt, das durch Deacetylierung des Chitins herstellbar ist, als oder im Schlichtemittel einzusetzen. Chitosan hat bakteriostatische und fungizide Wirkung, ist biologisch gut abbaubar, nicht toxisch, wundheilend, feuchtigkeitsbindend. Chitosan ist keinesfalls ein einheitliches Produkt, sodass wichtig ist, wie dieses hergestellt wurde.

Chitosan ist ein Produkt der Verseifung von Chitin. Chitin ist ein stickstoffhaltiges Polysaccharid mit 1,4-Verknüpfung der monomeren N-Aceytl-D-Glucosaminen, das in der Natur relativ weit verbreitet ist und bspw. in Pilzen oder in den Deckflügeln von Insekten auftritt. Bei Krustentieren ist Chitin der Hauptbestandteil des Exoskeletts. Durch Verseifung des Chitins mit starken Alkalien entsteht Chitosan. Je nach Verseifungsgrad weist es unterschiedliche Eigenschaften auf. Es hat in Wasser besseres Lösungsverhalten als Chitin und ist heute weltweit das wichtigste Chitinderivat. Weiter ist es möglich durch Einbringen von Seitengruppen die Löslichkeit weiter zu verbessern. Chitosan zeichnet sich z. B. durch gute Filmbildungseigenschaften, gute Dehnbarkeit und hohe Klebkraft aus.

Es ist nun Aufgabe der Erfindung, die Nachteile bekannter stärkehaltiger Faserstoffhilfsmittel zu verbessern.

Die Aufgabe wird erfindungsgemäß gelöst durch Stärke-Chitosan-Mischungen mit den Merkmalen des Patentanspruches 1. Ferner bezieht sich die Erfindung auf ein Verfahren zur Herstellung derselben gemäß Patentanspruch 9 sowie auf deren Verwendung nach Patentanspruch 12. Vorteilhafte Weiterbildungen ergeben sich aus den abhängigen Ansprüchen.

Unter "Stärke" werden hierin native Stärken sowie oxidativ, enzymatisch oder hydrolytisch abgebaute Wurzel-, Knollen-, Getreide und Leguminosenstärken oder deren Mischungen, deren chemisch modifizierte Formen, wie Stärkeether oder Stärkeester und/oder physikalisch modifizierte Stärken, z. B. mittels Extrusion, Walzentrocknung oder Sprühkochung behandelte verstanden.

Bevorzugt werden amphotere, hydroxypropylierte oder kationische Stärken mit einem hohen Anteil an Amylose eingesetzt.

Als Chitosankomponenten eignen sich deacetylierte Chitine mit und ohne zusätzliche chemische Modifizierung wie z. B. Chitosanhydrochlorid oder Carboxymethylchitosane. Die Chitosankomponente muss über eine gute Löslichkeit in Wasser ohne Zugabe von anorganischen oder organischen Säuren verfügen.

Die Chitosankomponenten haben folgende Charakteristika:

| | |
|---|---|
| pH: | 3 - 5 (1 %ig in Wasser) |
| Wasserlöslichkeit bei 20 °C | > 50 g/Liter |
| (ohne Säurezugabe): | |
| Aschegehalt: | <1,0% |
| Deacetylierungsgrad: | > 85 % |

Der Zusatz von Chitosan zur Stärke oder dem Stärkederivat kann in trockener Form als im Nassen erfolgen, bspw. durch Zugabe einer Chitosanlösung vor, während oder nach dem Verkleistern der Stärkekomponente. Es kann vorteilhaft sein, die erhaltene Mischung z. B. in einem Extruder physikalisch zu behandeln.

Die erfindungsgemäßen Stärke-Chitosan-Mischungen führen gegenüber entsprechenden reinen Stärkelösungen zu verbesserter Filmbildung (Tab. 1 Luftpermeabilität), verringerter Hydrophilie (Tab. 2) sowie höherer Klebkraft (Tab. 3 und Tab. 4 Oberflächenfestigkeitswerte oberflächengeleimter Papiere bzw. Klebkraftwerte beim Textilschlichten) und beeinflussen somit das Festigkeitsverhalten der damit behandelten Fasern bzw. Faserstoffprodukten positiv.

Schließlich vermeiden sie den Einsatz unphysiologischer Klebemittel und die damit verbundene Umweltbelastung bzw. Entsorgungsaufwand und möglicherweise Endverbraucherallergien.

Nachfolgend wird die Erfindung näher anhand bevorzugter Ausführungsbeispiele, auf die sie keineswegs eingeschränkt ist, sowie der beigefügten Zeichnungen näher erläutert. Dabei zeigt:
Tab. 1: Die Senkung der Luftdurchlässigkeit von mit Stärke-Chitosan-Mischungen beschichten Papierblättern.
Tab. 2: Hydrophobierende Eigenschaften von Stärke-Chitosan-Mischungen.
Tab. 3: Vergleich der Oberfächenfestigkeit von mit konventioneller Oberflächenstärke und Stärke-Chitosan-Mischungen behandelten Papieren.
Tab. 4: Die Klebkraft eines Schlichtemittels gemessen nach der Rotor-Ring Methode vom ITV Denkendorf

### Beispiel 1: Herstellung einer Stärke-Chitosan-Mischung für Papier

3 g einer kaltwasserlöslichen Chitosantype wurden mit 97g einer zuvor oxidativ abgebauten, niedrig viskosen (25 mPas bei 10 % Konzentration und 50 °C) Erbsenstärke (> 35 Gew.% Amylosegehalt) trocken vermischt. Von dieser Mischung wurde eine 7%ige wässrige Lösung hergestellt und diese mit einer Laborleimpresse auf ein Basispapier der Flächenmasse 80 g/m² aufgebracht. Als Referenz diente das mit der entsprechenden reinen Erbsenstärke - ohne Chitosanzusatz - in identischer Weise behandelte Basispapier. Die so erhaltenen Papiere wurden anschließend dem in Tab.1 dargestellten Luftdurchlässigkeitstest unterzogen.

### Papierbeschichtungsversuche

Tab.1: Die Senkung der Luftdurchlässigkeit von mit Chitosan-Stärke-Mischungen beschichten Papierblättern (gemessen nach der Gurley-Methode ISO 5636).

| **Stärkekomponente** | **Auftragsmenge** | **Luftdurchlässigkeit** |
|---|---|---|
| Stärke, Chitosan frei | 1,3 g/m²/Seite | 36 s/300 ml |
| Stärke-Chitosan-Mischung | 1,3 g/m²/Seite | 80 s/300ml |

### Beispiel 2: Herstellung einer Stärke-Chitosan-Mischung für Papier

1,5 g einer kaltwasserlöslichen Chitosantype wurden mit 98,5 g oxidativ viskositäts reduzierter und kationisierter Kartoffelstärke (Amylosegehalt > 20%) des Substitutionsgrads DS = 0,020 und der Viskosität von 40 mPas (bei 20 % Konzentration und 50 °C) trocken vermischt. Von dieser Mischung wurde eine 12 %ige wässrige Lösung hergestellt und diese mit einer Laborleimpresse auf ein Basispapier der Flächenmasse 80 g/m² aufgebracht. Als Referenz wurde das Basispapier mit dem reinen Kartoffelstärkederivat - ohne Chitosanzusatz - analog behandelt. Die erhaltenen Papiere wurden anschließend auf ihr Wasseraufnahme - (Tab. 2) und Trockenrupfverhalten (Rupfgeschwindigkeit, Tab. 3) geprüft.

**Tab.2: Hydrophobe Eigenschaften von mit Stärke-Chitosan-Mischungen behandelten Papieren (Senkung der Wasseraufnahme nach Cobb, Methode DIN 53132).**

| **Stärkekomponente** | **Auftragsmenge** | **Wasseraufnahme (Cobb₆₀")** |
|---|---|---|
| Stärke, Chitosan frei | 1,5 g/m²/Seite | 38 g/m² |
| Stärke-Chitosan-Mischg | 1,5 g/m²/Seite | 20 g/m² |

Die Bildung weitgehend geschlossener Stärke-Chitosan-Filme mit hydrophobierenden Eigenschaften führt - gegenüber der Chitosan freien Beschichtung - zur deutlichen Senkung des Wasseraufnahmevermögen des Substrats, was z. B. die Inkjetbedruckbarkeit bei sogenannte Büropapieren verbessert bzw. die Einsatzmenge an synthetischen Hydrophobierungsmitteln reduzieren kann.

**Tab.3: Vergleich der Oberfächenfestigkeit (IGT Trockenrupftest, Methode W 31) von mit konventioneller Oberflächenstärke und Stärke-Chitosan-Mischungen behandelten Papieren.**

| **Stärkekomponente** | **Auftragsmenge** | **Rupfgeschwindigkeit** |
|---|---|---|
| Stärke, Chitosan frei | 1,5 g/m²/Seite | 0,9 m/s |
| Stärke-Chitosan-Mischung | 1,5 g/m²/Seite | 1,5 m/s |

Deutlich zeigt sich, dass die Stärke-Chitosan-Mischung eine verstärkte Oberflächenfestigkeit liefert. Bei den Papierbeschichtungsversuchen wurden amylosereiche Stärken eingesetzt. Deutlich erkennt man den Vorteil der Chitosan-Beimischung, welche die biologische Abbaubarkeit nicht beeinträchtigt.

### Beispiel 3: Herstellung einer Stärke-Chitosan-Schlichte für Textilfasern

1 g bei pH 7 wasserlösliches modifiziertes Chitosan wurde mit 99 g einer amphoteren, hoch amylosehaltigen abgebauten hydroxylierten Stärke vermischt. Diese Mischung wurde in 5%iger Konzentration gekocht und als Schlichtemittel verwendet.

### Beispiel 4: Herstellung einer Stärke-Chitosan-Schlichte für Textilfasern

5 g bei pH 7 wasserlösliches, modifiziertes Chitosan wurde mit 95 g einer hydroxypropylierten abgebauten Kartoffelstärke vermischt. Diese Mischung wurde in 15 %iger Konzentration gekocht und als Schlichtemittel verwendet (Tab.4).

### Klebkraftversuche

Die Eigenschaften einer Schlichte sind nur in Kombination mit dem jeweiligen Substrat zu definieren. Um Schlichtemittel direkt miteinander vergleichen zu können hat das ITV Denkendorf die Rotor-Ring-Methode entwickelt. (Dr. Trauter: Neue Untersuchungen zur Klebkraft von Schlichtemitteln. Textil Praxis Int. Dez. 89). Die nach der ITV Methode ermittelten Klebkraftwerte von Chitosan erzielen im Vergleich zu modifizierten Stärken und synthetischen Schlichtemitteln sowohl auf Baumwolle als auch auf Polyesterfasern deutlich höhere Werte. Die Dehnfähigkeit ist vergleichbar mit den synthetischen Produkten.

Da die Klebkraft eines Schlichtemittels einer der wichtigsten Parameter ist und die Klebkraft der modifizierten Stärken im Vergleich zu den synthetischen Schlichtemitteln deutlich niedriger angesiedelt ist, kann durch Mischung mit Chitosan dieser Nachteil beseitigt werden. Der Vorteil einer Stärke-Chitosan-Mischung im Vergleich zu den synthetischen Produkten liegt u. a. in der guten biologischen Abbaubarkeit.

**Tab 4. Klebkraftversuche**

| Faserspezifische Klebkraft und Dehnung von Schlichtemitteln | | | | |
|---|---|---|---|---|
| **Schlichtemittel** | | **Textil** | | |
| | **BaumwolleKlebkraft** | **Dehnung** | **PolyesterKlebkraft** | **Dehnung** |
| Hydroxypropylierte, abgebaute Kartoffelstärke | ca. 30 cN | ca. 2 % | ca. 20 cN | ca. 5 % |
| | | | | |
| PVA | ca. 70 cN | ca. 4 % | ca. 50 cN | ca. 8 % |
| | | | | |
| Chitosan (carboxymethyliert, wasserlöslich) | ca. 150 cN | ca. 5 % | ca. 80 cN | ca. 10 % |
| | | | | |
| Mischprodukt aus: 75 % abgebaute Hydroxypropyl-stärke und 25 % PVA | ca. 40 cN | ca. 4 % | ca. 30 cN | ca. 8 % |
| | | | | |
| Mischprodukt hydroxypropylierte, abgebaute Kartoffelstärke 95% und 5% wasserl. Chitosan (s. Beispiel 4) | ca. 40 cN | ca. 4 % | ca.30 cN | ca. 8% |

Ermittelt am ITV Denkendorf nach der Rotor-Ring-Methode, Beschlichtungsgrad 1 % Deutlich erkennt man, dass durch den Einsatz des biologisch abbaubaren Chitosan der Einsatz des PVA vermieden werden kann, während die Schlichteeigenschaften vergleichbar sind.

## Patentansprüche

1. Stärke-Chitosan Mischung mit einem Gehalt von 0,1 - 50 Gew.% an wasserlöslichem Chitosan, wobei das Chitosan chemisch modifiziertes deacetyliertes Chitin ist und einen pH-Wert von 3 - 5 (1%ig in Wasser), eine Löslichkeit in Wasser bei 20°C (ohne Säurezugabe) von > 50 g/Liter, einen Aschegehalt <1,0% und einen Deacetylierungsgrad von >85% aufweist.

2. Stärke-Chitosan Mischung nach Anspruch 1, mit einem Gehalt von 0,5 - 20 Gew.% an wasserlöslichem Chitosan.

3. Stärke-Chitosan-Mischung nach Anspruch 1 oder 2, ferner **gekennzeichnet durch** weitere Hilfsmittel, ausgewählt aus der Gruppe bestehend aus anorganische oder organische Pigmente, Aluminiumoxid, Bariumsulfat, Calciumcarbonat, Kaolin, Titandioxid, Talkum, Satinweiß, Silikaten, Kunststoffpigmenten.

4. Stärke-Chitosan Mischung nach einem der vorangehenden Ansprüche, **dadurch gekennzeichnet, daß** die Stärke ausgewählt ist aus nativen, chemisch und/oder mechanisch modifizierten oder abgebauten Wurzel-, Knollen-, Getreide- und Leguminosenstärken und deren Mischungen.

5. Stärke-Chitosan Mischung nach einem der vorangehenden Ansprüche, **dadurch gekennzeichnet, daß** die modifizierte Stärke eine veretherte, veresterte oder ionisiete Stärke, insbesondere eine amphotere, hydroxypropylierte oder kationische Stärke ist.

6. Stärke-Chitosan Mischung nach einem der vorangehenden Ansprüche, **dadurch gekennzeichnet, daß** die Stärke physikalisch durch Scherkräfte abgebaut ist.

7. Stärke-Chitosan Mischung nach Anspruch 1 - 5, **dadurch gekennzeichnet, daß** die modifizierte Stärke chemisch oder enzymatisch abgebaut ist.

8. Stärke-Chitosan Mischung nach einem der Ansprüche 6 oder 7, wobei das Chitosan ausgewählt ist aus deacetyliertem Chitosanhydrochlorid und Carboxymethylchitosan.

9. Verfahren zur Herstellung einer Stärke-Chitosan Mischung nach einem der vorangehenden Ansprüche, durch
- Mischen von 99,9 - 50 Gew.% wasserlöslichem Chitosan, wobei das Chitosan chemisch modifiziertes deacatyliertes Chitin ist und einen pH-Wert von 3 - 5 (1%ig in Wasser), eine Löslichkeit in Wasser bei 20°C (ohne Säurezugabe) von > 50 g/Liter, einen Aschegehalt <1,0% und einen Deacetylierungsgrad von >85% aufweist, mit 0,1 - 50 Gew.% Stärke
- Herstellen einer wäßrigen Lösung der Mischung
- Behandeln der wässrigen Lösung in einem Sprühkocher; und
- Trockenen des gekochten stärkehaltigen Produkts.

10. Verfahren nach Anspruch 9, **dadurch gekennzeichnet, dass** die Stärke-Chitosan Mischung durch eine Vorrichtung ausgewählt aus der Gruppe bestehend aus Extruder, Walzentrockner und Sprühkocher behandelt wird.

11. Verfahren nach Anspruch 10, **gekennzeichnet durch** Zumischen mindestens eines der nachfolgenden Hilfsmittels anorganischen oder organischen Pigmenten, Aluminium-oxid, Bariumsulfat Calciumcarbonat, Kaolin. Titandioxid, Talkum, Satinweiß, Silikaten oder Kunststoffpigmenten.

12. Verwendung der Stärke-Ohitosan Mischung gemäß einem der vorangehenden Ansprüche zur Behandlung von Faserstoffen, Garnen, Filamenten Glasfasern, Holzfasern, Viskosefasern, Kunstfasern und Geweben hieraus.

13. Verwendung der Stärke-Ohitosan Mischung gemäß Anspruch 12, wobei die Faserstoffe ausgewählt sind aus Holzfeserprodwkten, Zellstoff-, Recyclingfaserstoff-, Holzschliffprodukten und deren Mischungen, Papieren, Pappen, Kunststoff-, Textil- und Glasfaserprodukten.

14. Verwendung der Stärke-Ohitosan Mischung nach Anspruch 12 -13, als Beschichtung auf die Faserproduktoberfläche oder als Zumischung zum Faserstoffmaterial.

15. Verwendung der Stärke-Ohitosan Mischung nach Anspruch 12 - 14 gemeinsam mit einem oder mehreren der Gruppe: anorganischen organischen Additiven, Monomeren, Oligomeren oder Polymeren unterschiedlicher Landung. Polarität oder Hydrophobie.

## Claims

1. Starch-chitosan mixture with a content of 0.1 - 50 wt.% of water-soluble chitosan, whereas the chitosan is a chemically modified deacetylated chitin and has a pH-value of 3 - 5 (1% in water), solubility in water at 20°C (without adding acids) of > 50g/liter, an ash content < 1.0% and a degree of deacetylation of >85%.

2. Starch-chitosan mixture according to claim 1, with a content of 0.5 - 20 wt.% of water-soluble chitosan.

3. Starch-chitosan mixture according to claim 1 or 2, further **characterized by** additional additives, selected from the group consisting of inorganic or organic pigments, aluminum oxide, barium sulphate, calcium carbonate, kaolin, titanium dioxide, talcum, satin-white, silicates, plastic pigments.

4. Starch-chitosan mixture according to one of the previous claims, **characterized in that** the starch is selected from native, chemically and/or mechanically modified or degraded root, tuber, grain and legume starches and combinations thereof.

5. Starch-chitosan mixture according to one of the previous claims, **characterized in that** the modified starch is an etherified, esterified or ionised starch, particularly an amphoteric, hydroxypropylised or cationic starch.

6. starch-chitosan mixture according to one of the previous claims, **characterized in that** the starch is physically degraded by shear forces.

7. Starch-chitosan mixture according to claims 1 - 5, **characterized in that** the modified starch is chemically or enzymatically degraded.

8. Starch-chitosan mixture according to one of the claims 6 or 7, whereas the chitosan has been selected from deacetylated chitosan hydrochloride and carboxymethyl chitosan.

9. Method for producing a starch-chitosan mixture according to one of the previous claims, by
- Mixing 99.9 - 50 wt.% water-soluble chitosan, whereas the chitosan is a chemically modified deacetylated chitin having a pH-value of 3 - 5 (1% in water), solubility in water at 20°C (without adding acids) of > 50g/liter, an ash content < 1.0% and a degree of deacetylation of >85%, with 0.1 - 50 wt.% starch
- Producing an aqueous solution of the mixture,
- Treating the aqueous solution in a spray boiler; and
- Drying the boiled starchy products.

10. Method according to claim 9, **characterized in that** the starch-chitosan mixture is treated by means of a device, selected from the group, consisting of an extruder, a drum dryer and a spray cooker.

11. Method according to claim 10, **characterized by** adding of at least on of the following additives: inorganic or organic pigments, aluminum oxide, barium sulphate, calcium carbonate, kaolin, titanium dioxide, talcum, satin-white, silicates, or plastic pigments.

12. Use of the starch-chitosan mixture according to one of the previous claims for treating fibers, threads, filaments, glass fibers, wood fibers, viscose fiber, synthetic fibers and fabrics thereof.

13. Use of the starch-chitosan mixture according to claim 12, whereas the fibers are selected from wood fiber products, cellulose, recycling fibers, groundwood products and their mixtures, paper, cardboard and plastic, textile and glass fiber products.

14. Use of the starch-chitosan mixture according to claim 12 - 13 as coating on fiber product surfaces or as admixture to the fiber material.

15. Use of the starch-chitosan mixture according to claim 12 - 14 together with one or more of the group: inorganic and organic additives, monomers, oligomers or polymers of different electrical charge, polarity or hydrophobia.

## Revendications

1. Mélange d'amidon-chitosane comprennant 0,1 - 50 % en poids en chitosan soluble dans l'eau, où le chitosan est une chitine déacétylasée chimiquement modifiée et qui présente une valeur de pH de 3 à 5 (1% dans l'eau), avec une solubilité aqueuse à 20°C (sans adjonction d'acide) > 50 g / litre, une teneur en cendres <1,0% et un degré de déacétylation > à 85%.

2. Mélange d'amidon-chitosane selon revendication 1, avec une teneur de 0,5 - 20 % en poids en chitosan soluble dans l'eau.

3. Mélange d'amidon-chitosane selon revendication 1 ou 2, **caractérisé en** d'autres moyens, choisi dans le group constitué par pigments anorganiques ou organiques, d'oxyde d'aluminium, de sulfate de baryum, de carbonate de calcium, de choline, de dioxyde de titan, de talc, de satin de soie, de silicate, de pigments en matière synthétique.

4. Mélange d'amidon-chitosane selon une des revendications précédentes, **caractérisé en ce que,** l'amidon est choisi dans le group constitue par l'amidon de racines, de tubercules, de céréales et de légumineuses natives, chimiques et/ou modifiées mécaniquement ou réduites ainsi que de leur mélange.

5. Mélange d'amidon-chitosane selon une des revendications précédentes, **caractérisé en ce que** l'amidon modifié est un amidon éthérifié, estérifié ou ionisé, en particulier un amidon amphotère, hydroxypropylée ou cationique.

6. Mélange d'amidon-chitosane selon une des revendications précédentes, **caractérisé en ce que** l'amidon est degradé physiquement par des forces de cisaillement.

7. Mélange d'amidon-chitosane selon revendications 1 - 5, **caractérisé en ce que**, l'amidon modifié est degradé chimiquement ou enzymatiquement.

8. Mélange d'amidon-chitosane selon une des revendications 6 ou 7, où le chitosan est choisi parmi l'hydrochloride de chitosan déacétylasé et de chitosan de carboxy méthyl.

9. Procédé pour la fabrication d'un mélange d'amidon-chitosane selon une des revendications précédentes, par
- un mélange de 99,9 - 50 % en poids de chitosan soluble, où le chitosan est une chitine déacétylasée chimiquement modifiée et qui présente une valeur de pH de 3 à 5 (1% dans l'eau), une solution dans l'eau à 20°C (sans adjonction d'acide) > à 50 g / litre, une teneur en cendres < à 1,0% et un pourcentage de déacetylase > à 85% avec 0,1 - 50 % en poids d'amidon,
- fabrication de la solution aqueuse du mélange,
- traitement de la solution aqueuse dans un bouilleur-pulvérisateur et
- séchage du produit contenant de l'amidon bouilli.

10. Procédé selon revendication 9, **caractérisé en ce que**, le mélange d'amidon-chitosan sélectionné est traité par un dispositif choisi dans le groupe constitue par l'extrudeurs, cylindres sécheurs et bouilleur-pulvérisateurs.

11. Procédé selon revendication 10, **caractérisé par** un mélange d'au moins un des agents suivants : pigments anorganiques ou organiques, oxyde d'aluminium, sulfate de baryum, de carbonate de calcium, silicate d'aluminium, dioxyde de titane, talc, satin en soie, silicate ou pigments en matière synthétique.

12. Utilisation du mélange d'amidon-chitosane selon une des revendications précédentes pour le traitement des fibres, des fils, des filaments de fibre de verre, des fibres de bois, des fibres de viscose, des fibres synthétiques et des fabrics.

13. Utilisation du mélange d'amidon-chikosane selon revendication 12, où les fibres sont chosi parmi: produits en fibre de bois, produits en cellulose, produits en matière fibreuse recyclée, de produits en pâte de bois et de leur mélange, de papier, de carton, de produits en matière synthétique, en textile et en fibre de verre.

14. Utilisation du mélange d'amidon-chitosane selon revendications 12 - 13, comme enduit sur la surface de produit en fibre ou comme additif pour le matériel fibreuse.

15. Utilisation du mélange d'amidon-chitosane selon revendications 12 - 14 avec un ou plusieurs du groupe : additifs anorganiques, organiques, monomères, oligomères ou polymères de charge, polarité ou hydrophobie différente.
